# EUROPÄISCHE PATENTSCHRIFT

(11) **EP 2 925 468 B1**
(45) Veröffentlichungstag und Bekanntmachung des Hinweises auf die Patenterteilung: **17.02.2021**
(21) Anmeldenummer: 13802915.2
(22) Anmeldetag: 28.11.2013
(51) Int. Cl.: B22D 17/24, B22C 9/10, B29C 33/48, B22D 17/22

(54) **FALTKERN UND DAMIT AUSGERÜSTETE GIESSFORMHÄLFTE**
HOLLOW CORE AND A CASTING MOULD HALF EQUIPPED THEREWITH
NOYAU ÉCLIPSABLE ET DEMI-MOULE ÉQUIPÉ DUDIT NOYAU

(30) Priorität: 28.11.2012 DE 102012221790
(43) Veröffentlichungstag der Anmeldung: 07.10.2015
(73) Patentinhaber: Oskar Frech GmbH + Co. KG, 73614 Schorndorf (DE)
(72) Erfinder: ASPACHER, Ronny, 73614 Schorndorf (DE); TREBES, Herbert, 73614 Schorndorf (DE); ERHARD, Norbert, 73547 Lorch (DE)
(74) Vertreter: Patentanwälte Ruff, Wilhelm, Beier, Dauster & Partner mbB
(86) Internationale Anmeldenummer: PCT/EP2013/074950
(87) Internationale Veröffentlichungsnummer: WO 2014/083098

(56) Entgegenhaltungen:
- DE-C1- 10 033 207
- FR-A1- 2 418 687
- US-A1- 2009 152 770
- US-A1- 2010 323 051

## Beschreibung

Die Erfindung bezieht sich auf eine Gießformhälfte mit einer Faltkernaufnahme und einem Faltkern, insbesondere für eine Druckgussform. Der Faltkern weist einen Basiskörper und einen sich von diesem im Wesentlichen axial erstreckenden Kernzylinderkörper auf.

Faltkerne, die auch als Einfallkerne bezeichnet werden, finden bislang üblicherweise in der Kunststoffspritzgießtechnik Verwendung, um Kunststoffteile herstellen zu können, die Hinterschneidungen aufweisen, z.B. ein Gewinde. Ein bekannter Typ von Einfallkern weist hierzu einen Kernzylinderkörper auf, der sich im Wesentlichen axial von einem Basiskörper aus erstreckt und einen axial beweglichen Mittelkern sowie eine Mehrzahl von diesen umgebenden, axial unbeweglichen Kernsegmenten beinhaltet. Bei einem solchen Einfallkern, wie er in der Offenlegungsschrift DE 10 2011 011 784 A1 offenbart ist, hat der Mittelkern eine Kegelstumpfform, wobei die Kernsegmente formschlüssig mittels Schwalbenschwanzführungen am Kegelmantel des Mittelkerns so geführt sind, dass sie bei axialer Bewegung des Mittelkerns die gewünschte Einfallbewegung zur Längsmittelachse des Faltkerns hin ausführen. Als Kernsegmente wechseln sich alternierend drei breitere Hauptsegmente mit drei schmaleren Zwischensegmenten in Umfangsrichtung des Mittelkerns ab, wobei die Hauptsegmente an ersten Keilflächen des Mittelkerns und die Zwischensegmente an zweiten Keilflächen des Mittelkerns mit gegenüber den ersten Keilflächen größerem Keilwinkel geführt sind. Jedes Zwischensegment weist einen sich radial nach außen konisch verjüngenden Querschnitt und entsprechend V-förmig gegeneinander geneigte Seitenkanten auf, die als Anschlagflächen fungieren, mit denen es gegen korrespondierende Anschlagflächen der beiden angrenzenden Hauptsegmente anliegt. Die Hauptsegmente weisen spitze Kantenwinkel zwischen Außenfläche und Anschlagfläche von ca. 50° auf. Wenn der Mittelkern axial zurückbewegt wird, gleiten die Zwischensegmente mit ihren Anschlagflächen entlang den Hauptsegment-Anschlagflächen relativ zu den Hauptsegmenten radial nach innen, und die Hauptsegmente können sich ihrerseits etwas radial nach innen verlagern.

Dieser bekannte Typ von Faltkern ist für die Verwendung beim Kunststoffspritzgießen ausgelegt und für eine Verwendung in der Metalldruckgusstechnik nicht bestimmt und im Allgemeinen auch nicht geeignet. So erfordert eine Verwendung in der Metalldruckgusstechnik, dass der Faltkern den dort üblicherweise herrschenden, gegenüber dem Kunststoffspritzgießen deutlich höheren Drücken standhalten muss, worauf übliche Kunststoffspritzguss-Faltkerne nicht ausgelegt sind.

Die Patentschrift DE 197 45 516 C2 offenbart einen in einer Spritzgießform oder Gießform verwendbaren Einfallkern, bei dem mindestens zwei Schieberelemente zum Ausbilden mindestens einer Hinterschneidung am herzustellenden Spritzgießteil oder Gießteil radial beweglich in einem Kernzylinderkörper gehalten sind. Der Kernzylinderkörper ist in einen Grundkörper, an dem ein erstes Schieberelement angeordnet ist, und einen beim Entformen gegenüber dem Grundkörper axial vorbewegten Kernkopf gegliedert, an dem ein zweites Schieberelement angeordnet ist. Die Entformbewegung des ersten Schieberelements radial nach außen wird durch eine axial durch den Grundkörper hindurchgeführte Steuerstange bewirkt, diejenige für das zweite Schieberelement durch eine ähnliche weitere Steuerstange oder durch die axiale Entformbewegung des Kernkopfes unter Verwendung geeigneter Führungsmittel. Zur Axialbetätigung des Kernkopfes ist ein zugehöriger Kopfstössel längsmittig durch den Grundkörper hindurchgeführt.

Weitere herkömmliche Faltkerne mit einem Mittelkern, bei denen mindestens der Mittelkern nicht ohne Demontage bzw. Auseinanderbauen der zugeordneten Formhälfte abgenommen werden kann, sind in den Offenlegungsschriften FR 2 418 687 A1, US 2010/0323051 A1 und US 2009/0152770 A1 offenbart.

Die Patentschrift DE 100 33 207 C1 offenbart eine Einsatzanordnung für Formwerkzeuge, die einen Einsatz mit einer Stirnfläche, einer Umfangsfläche, einer Formfläche, einer von der Stirnfläche ausgehenden Sacklochbohrung und einer Querbohrung aufweist, welche die Sacklochbohrung schneidet und zur Umfangsfläche offen ist. Der Einsatz wird in eine Bohrung einer Formplatte eingesetzt, die ihrerseits zum Rüsten einer Formhälfte eines entsprechenden Formwerkzeuges in einen Formrahmen eingesetzt und mit diesem verspannt wird. Der Einsatz wird in der Bohrung der Formplatte mittels mindestens eines Riegelelementes festgelegt, das in der Querbohrung des Einsatzes zwischen einer Spannposition, in der es teilweise über die Umfangsfläche des Einsatzes hinausragt, sowie einer Löseposition verlagerbar ist, in der es innerhalb der Umfangsfläche liegt. Zur Verlagerung des Riegelelementes dient ein Gewindestift, der in der Sacklochbohrung zwischen einer eingefahrenen, in der er nicht in die Querbohrung vorsteht, und einer ausgefahrenen Stellung verfahren werden kann, in welcher er sich in diese hinein erstreckt und das Riegelelement in Löseposition bringt. Um im gerüsteten Zustand des Formwerkzeugs das Riegelelement von der Spannposition in die Löseposition zu überführen und dadurch den Einsatz aus der Bohrung der Formplatte herausnehmen zu können, muss zunächst ein Durchbruch von der Formfläche her zu einem Bohrungsgrund eines Kerns des Einsatzes hergestellt werden. Dann kann der Gewindestift mittels eines Werkzeuges entsprechend betätigt werden. Danach ist der herausgenommene Einsatz nicht mehr verwendbar.

Die oben erwähnten herkömmlichen Faltkerne sind fest in eine zugehörige Gießformhälfte eingebaut und können daher im laufenden Gießbetrieb nicht von der Gießformhälfte abgenommen werden. Dazu muss vielmehr die gesamte Gießformhälfte von der Gießmaschine abgenommen und zerlegt werden.

In der Metalldruckgusstechnik gibt es Anwendungen, bei denen die den Formhohlraum definierende Gießformfläche wenigstens bereichsweise mit einem Beschichtungsmaterial versehen wird, das dann durch den Gießvorgang auf einen Oberflächenbereich des zu gießenden Bauteils übertragen wird.

Der Erfindung liegt als technisches Problem die Bereitstellung einer Gießformhälfte der eingangs genannten Art mit erweiterten Anwendungsmöglichkeiten insbesondere auch in der Metalldruckgusstechnik zugrunde.

Die Erfindung löst dieses Problem durch die Bereitstellung einer Gießformhälfte mit den Merkmalen des Anspruchs 1. Vorteilhafte Weiterbildungen der Erfindung sind in den Unteransprüchen angegeben.

Erfindungsgemäß ist der Faltkern lösbar von der Formhohlraumseite her in die Faltkernaufnahme der Gießformhälfte eingesetzt. Er ist als wiederverwendbar abnehmbarer Faltkern ausgeführt, wobei er an der Gießformhälfte formhohlraumseitig lösbar angebracht werden kann, d.h. von der dem Formhohlraum bzw. der gegenüberliegenden Gießformhälfte zugewandten Seite der Gießformhälfte her. Dies macht es möglich, den Faltkern im laufenden Betrieb zwischen zwei Gießzyklen von der zugehörigen Gießformhälfte abzunehmen und ihn oder einen anderen Faltkern danach wieder lösbar anzubringen. Mit anderen Worten kann dieser Faltkern als Wechselsatz an der zugehörigen Gießformhälfte während des Gießbetriebs zwischen je zwei Gießzyklen getauscht bzw. abgenommen und wieder angebracht werden, ohne dass dazu die Gießformhälfte, vorliegend auch kurz als Formhälfte bezeichnet, insgesamt demontiert und zerlegt werden muss.

Diese vorteilhafte Eigenschaft des dergestalt ausgebildeten Faltkerns lässt sich beispielsweise in der Metalldruckgusstechnik dazu nutzen, den Faltkern zwischen zwei Gießzyklen von der Gießformhälfte abzunehmen, mit einem auf das zu gießende Bauteil zu übertragenden Beschichtungsmaterial zu versehen und ihn dann wieder von vorne an der Gießformhälfte zu montieren, so dass im anschließenden Gießzyklus das Beschichtungsmaterial vom Faltkern auf das zu gießende Bauteil übertragen werden kann. Die abnehmbare Anbringung des Faltkerns an der Gießformhälfte erlaubt es in diesem Fall, den Faltkern an den Ort zu verbringen, an welchem das Beschichtungsmaterial bereitgehalten wird, so dass der Faltkern nicht in seiner an der Gießformhälfte montierten Lage mit dem Beschichtungsmaterial versehen werden muss. Wie gesagt, ermöglicht dies ein Abnehmen und Wiederanbringen des Faltkerns von bzw. an der Gießformhälfte zwischen Gießzyklen im laufenden Gießbetrieb, ohne dass die Gießformhälfte dafür abgenommen und zerlegt werden muss.

In einer Ausgestaltung dieser erfindungsgemäßen Maßnahme weist der Faltkern ein Rastmittel für eine Rastverbindung mit der Formhälfte auf. Dies bietet vorteilhaft die Voraussetzung, dass der Faltkern rastend an der zugehörigen Gießformhälfte lösbar angebracht werden kann.

In einer vorteilhaften Weiterbildung stellt die Erfindung einen Faltkern bereit, bei dem der Kernzylinderkörper wenigstens zwei erste zylindersegmentförmige Kernbacken und wenigstens zwei in Umfangsrichtung alternierend zu diesen angeordnete zweite zylindersegmentförmige Kernbacken aufweist, wobei die ersten und die zweiten Kernbacken relativbeweglich aneinander gehalten sind. Dabei beinhaltet die Relativbewegung zwischen den ersten und den zweiten Kernbacken eine axiale Relativbewegungskomponente zwischen den ersten und den zweiten Kernbacken sowie eine radiale Einfallbewegung der ersten und/oder der zweiten Kernbacken.

Da bei diesem Faltkern die Kernbacken relativbeweglich aneinander gehalten sind, bedarf es keines beweglichen Mittelkerns. Im Gegensatz zu den mit einem Mittelkern versehenen herkömmlichen Faltkernen wird bei diesem Faltkern die radiale Einfallbewegung durch eine axiale Relativbewegungskomponente der zylindersegmentförmigen Kernbacken selbst und nicht durch eine Axialbewegung eines Mittelkerns induziert. Dazu sind die ersten und die zweiten Kernbacken geeignet aneinander geführt. Der so charakterisierte Faltkern lässt sich konstruktiv vorteilhaft so ausführen, dass er problemlos auch den vergleichsweise hohen Drücken von Metalldruckgießvorgängen standhalten kann.

In einer Weiterbildung weisen in Axialrichtung vom Basiskörper weg die ersten Kernbacken eine konisch abnehmende und die zweiten Kernbacken eine korrespondierend konisch zunehmende Segmentbreite oder umgekehrt die ersten Kernbacken eine konisch zunehmende und die zweiten Kernbacken eine korrespondierend konisch abnehmende Segmentbreite auf. Dies stellt eine konstruktiv einfache Lösung dar, durch die axiale Relativbewegungskomponente der ersten gegenüber den zweiten Kernbacken die gewünschte radiale Einfallbewegung für den Faltkern zu induzieren.

In einer Weiterbildung der Erfindung weisen die zweiten Kernbacken Aufnahmemittel für eine Kernbacken-Vorschubstange der zugehörigen Formhälfte auf. Dies schafft die Voraussetzung dafür, mittels der Kernbacken-Vorschubstange der Formhälfte die für die radiale Einfallbewegung der Kernbacken benötigte Relativbewegung zwischen den ersten und den zweiten Kernbacken zu bewirken.

In einer Weiterbildung der Erfindung sind die ersten und zweiten Kernbacken durch formschlüssig zwischen ihnen wirkende Führungsmittel aneinander geführt. Dazu können diese Führungsmittel z.B. jeweils eine Führungsnut mit T-förmigen oder L-förmigem Querschnitt oder Schwalbenschwanz-Querschnitt an einer ersten oder zweiten Kernbacke und einen in der Führungsnut aufgenommenen Führungssteg mit korrespondierendem Querschnitt an einer angrenzenden zweiten bzw. ersten Kernbacke beinhalten. Dadurch ist jede erste Kernbacke seitlich an den beiden angrenzenden zweiten Kernbacken sicher geführt, und in gleicher Weise ist jede zweite Kernbacke seitlich an den beiden angrenzenden ersten Kernbacken sicher geführt.

In einer Weiterbildung der Erfindung weisen die ersten und zweiten Kernbacken an ihren Seitenkanten Winkel zu den Außen- und Innenkanten auf, die sämtlich größer als 60° sind. Diese konstruktive Maßnahme wirkt sich sehr vorteilhaft hinsichtlich einer hohen Druckbelastbarkeit des Faltkerns aus.

Eine erfindungsgemäße Gießformhälfte weist eine Faltkernaufnahme auf, in die der erfindungsgemäße Faltkern einsetzbar ist.

In einer Weiterbildung der Erfindung weist die Gießformhälfte die oben erwähnte Kernbacken-Vorschubstange und eine Auswerfervorrichtung auf, mit der die Kernbacken-Vorschubstange gekoppelt ist. Dadurch kann die Kernbacken-Relativbewegung zum Induzieren der radialen Einfallbewegung des Faltkerns unter Nutzung der Auswerfervorrichtung bewirkt werden.

In einer Weiterbildung der Erfindung weist die Gießformhälfte ein mit dem erwähnten Faltkern-Rastmittel zusammenwirkendes Rastmittel, eine Auswerfervorrichtung und ein mit der Auswerfervorrichtung gekoppeltes Ausrastelement auf. Mit dem Ausrastelement kann die von den zusammenwirkenden Rastmitteln gebildete Rastverbindung selbsttätig, d.h. unter der Wirkung der Auswerfervorrichtung, gelöst werden. Dies erlaubt in vorteilhafter Weise ein Vorbewegen des Faltkerns im Rahmen eines entsprechenden Entformungsvorgangs und bei Bedarf das Abnehmen des ausgerasteten Faltkerns von der Gießformhälfte.

Vorteilhafte Ausführungsformen der Erfindung sind in den Zeichnungen dargestellt und werden nachfolgend beschrieben. Hierbei zeigen:

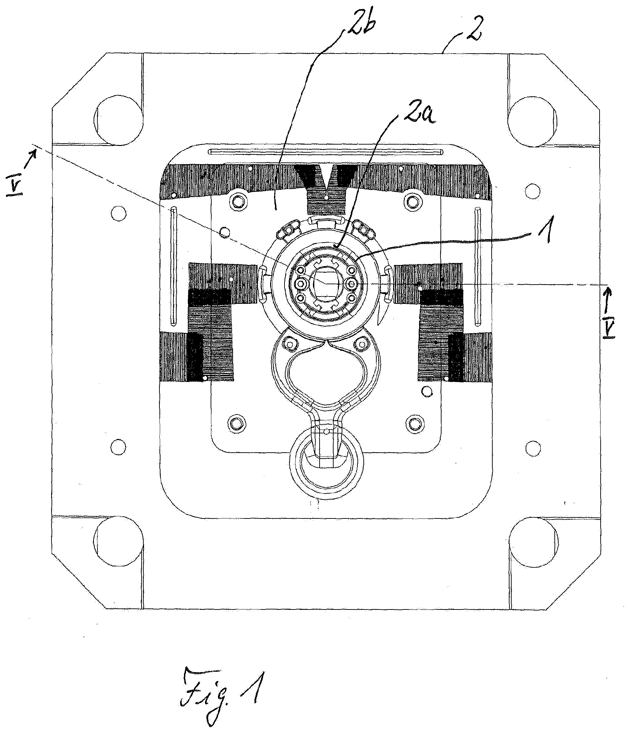

Fig. 1 eine Draufsicht auf eine Gießformhälfte einer Metalldruckgussform mit montiertem Faltkern,

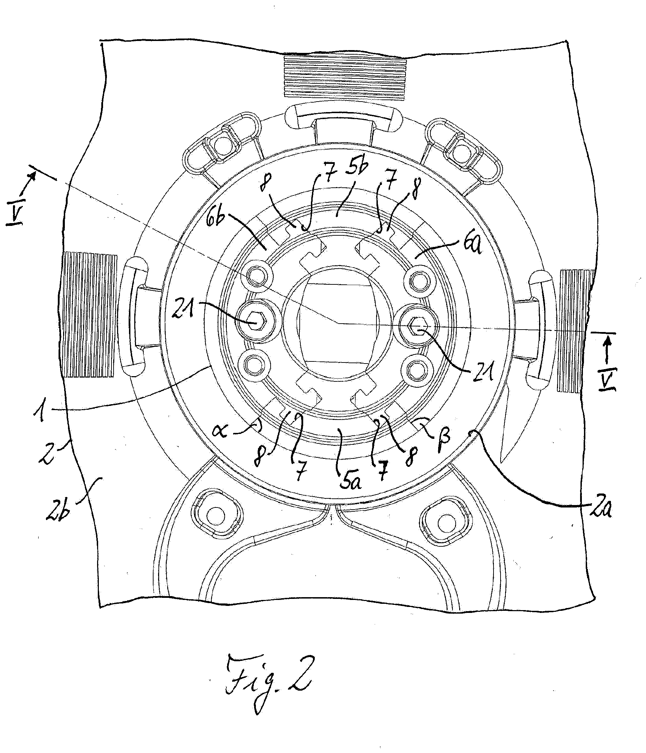

Fig. 2 eine detailliertere Ansicht von Fig. 1 im Bereich des Faltkerns,
Fig. 3 eine Perspektivansicht von schräg oben auf den Faltkern in einer Einfallposition,
Fig. 4 eine seitliche Perspektivansicht des Faltkerns in der Stellung von Fig. 3,
Fig. 5 eine Schnittansicht längs einer Linie V-V der Fig. 1 und 2 mit in einer Gießposition befindlichem Faltkern,
Fig. 6 die Ansicht von Fig. 5 mit dem Faltkern in einer teilausgeworfenen Einfallposition,
Fig. 7 die Ansicht von Fig. 5 mit dem Faltkern in einer vollständig ausgeworfenen Einfallposition und
Fig. 8 die Ansicht von Fig. 5 mit von der Gießformhälfte abgenommenem Faltkern.

Die Figuren zeigen einen Faltkern 1 in Verwendung beim Metallgießen, wozu der Faltkern 1 an einer Formhälfte 2 einer entsprechenden Metalldruckgussform angebracht ist, speziell in einer zugehörigen Faltkernaufnahme 2a, die an einer formhohlraumzugewandten Seite 2b der Formhälfte 2 vorgesehen ist. Im gezeigten Fall handelt es sich um die bewegliche Formhälfte der Druckgussform, alternativ kann vorgesehen sein, einen Faltkern an der festen Formhälfte einer Druckgussform anzubringen.

Im gezeigten Beispiel beinhaltet der Faltkern 1 einen Basiskörper 3 und einen sich von diesem axial erstreckenden Kernzylinderkörper 4, der von vier zylindersegmentförmigen Kernbacken 5a, 5b, 6a, 6b gebildet ist. Speziell sind dies zwei erste Kernbacken 5a, 5b und zwei zu diesen in Umfangsrichtung alternierend angeordnete zweite Kernbacken 6a, 6b.

Die ersten und die zweiten Kernbacken 5a, 5b, 6a, 6b sind relativbeweglich aneinander gehalten, wobei diese Relativbewegung eine axiale Relativbewegungskomponente zwischen den ersten und den zweiten Kernbacken 5a, 5b, 6a, 6b und eine radiale Einfallbewegung der ersten und der zweiten Kernbacken 5a, 5b, 6a, 6b beinhaltet. Dazu sind die ersten und die zweiten Kernbacken 5a, 5b, 6a, 6b geeignet aneinander geführt, im gezeigten Beispiel speziell durch formschlüssig zwischen ihnen wirkende Führungsmittel. Diese Führungsmittel beinhalten an jeder der beiden Längsseiten jeder ersten Kernbacke 5a, 5b je eine Führungsnut 7 mit T-förmigem Querschnitt und an jeder der beiden Längsseiten jeder zweiten Kernbacke 6a, 6b je einen in der zugehörigen Führungsnut 7 aufgenommenen Führungssteg 8 mit korrespondierend T-förmigem Querschnitt. Alternativ sind andere herkömmliche Formschlussmittel verwendbar, wie Führungen mit L-förmigem Querschnitt oder Schwalbenschwanzführungen.

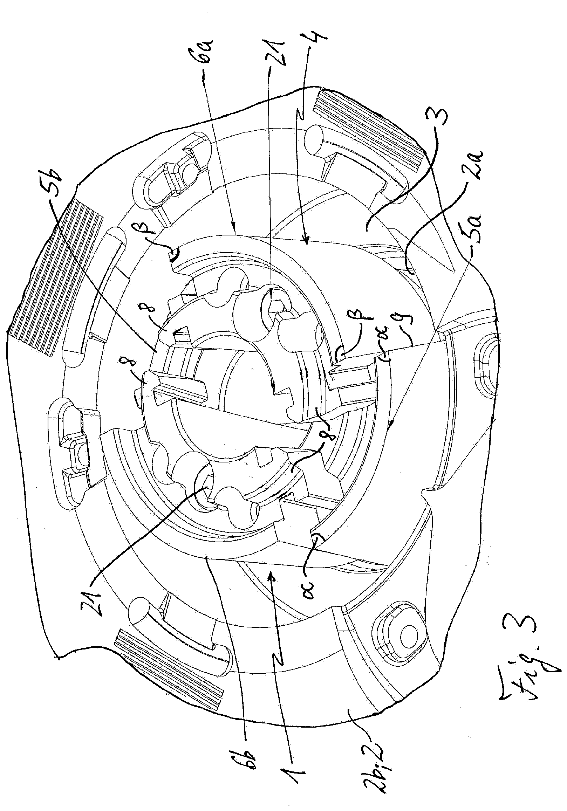

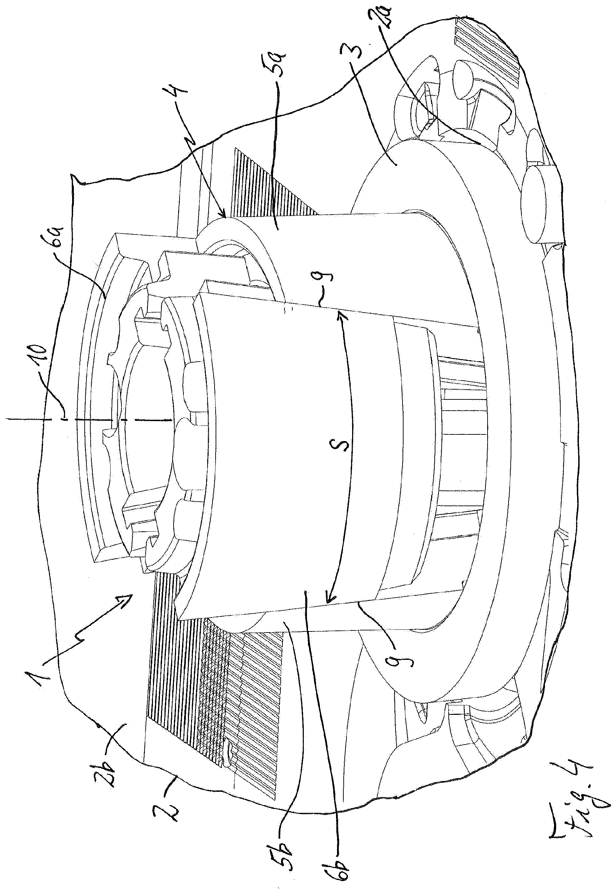

Wie insbesondere aus den Figuren 3 und 4 hervorgeht, weisen die ersten Kernbacken 5a, 5b eine in Axialrichtung vom Basiskörper 3 weg konisch abnehmende Segmentbreite, d.h. Umfangswinkelerstreckung, auf, und die zweiten Kernbacken 6a, 6b weisen eine korrespondierend konisch zunehmende Segmentbreite S auf. Mit anderen Worten sind die ersten und die zweiten Kernbacken in Seitenansicht von jeweils trapezförmiger Gestalt, so dass jede erste und jede zweite Kernbacke 5a, 5b, bzw. 6a, 6b mit V-förmig geneigten Längsseiten gegen umgekehrt V-förmig geneigte Längsseiten der jeweils benachbarten zweiten bzw. ersten Kernbacken 6a, 6b bzw. 5a, 5b angrenzt. Mit anderen Worten bilden diese Kernbacken-Längsseiten Anschlagflächen 9 mit denen je eine erste Kernbacke 5a, 5b und je eine zweite Kernbacke 6a, 6b flächig längs einer Linie gegeneinander anliegen, die schräg zur Kernlängsachse 10 mit einer axialen Hauptkomponente und einer Umfangsrichtungskomponente verläuft.

Längs solcher Schräglinien verlaufen entsprechend auch die Führungsnuten 7 und die Führungsstege 8, mit denen die ersten und die zweiten Kernbacken 5a, 5b, 6a, 6b aneinander dergestalt beweglich geführt sind, dass sich durch Vorbewegen der zweiten Kernbacken 6a, 6b sowohl die ersten Kernbacken 5a, 5b als auch die zweiten Kernbacken 6a, 6b um ein vorgebbares Maß radial nach innen bewegen, was die gewünschte Einfallbewegung des Faltkerns 1 ergibt. Die Figuren 3 und 4 zeigen den Faltkern 1 in dieser eingefalteten Stellung mit gegenüber den ersten Kernbacken 5a, 5b vorbewegten zweiten Kernbacken 6a, 6b.

Im gezeigten Beispiel wird die axiale Relativbewegungskomponente zwischen den ersten und den zweiten Kernbacken 5a, 5b, 6a, 6b durch aktives Vorbewegen der zweiten Kernbacken 6a, 6b relativ zum Basiskörper 3 und den gegenüber dem Basiskörper 3 axial unbeweglich bleibenden ersten Kernbacken 5a, 5b bewirkt. In alternativen Ausführungsformen der Erfindung kann der Faltkern durch entsprechend modifizierte Gestaltung der Kernbacken-Führungsmittel so ausgeführt sein, dass die Einfallbewegung durch aktives Bewegen nur der ersten Kernbacken oder durch aktives Relativbewegen sowohl der ersten als auch der zweiten Kernbacken bewirkt wird.

Im gezeigten Beispiel besteht der Kernzylinderkörper 4 aus je einem Paar sich gegenüberliegender erster und zweiter Kernbacken 5a, 5b bzw. 6a, 6b. In alternativen Ausführungsformen besteht der Kernzylinderkörper aus einer beliebigen anderen Anzahl von ersten und in Umfangsrichtung alternierend zu diesen angeordneten zweiten Kernbacken, wobei jeweils alle ersten und alle zweiten Kernbacken untereinander synchron bewegt bzw. stationär gehalten werden. Dabei sind die Kernbacken 5a, 5b, 6a, 6b vorzugsweise direkt aneinander geführt und gehalten, ohne dass ein Mittelkern benötigt wird, so dass ein solcher im gezeigten Beispiel auch nicht vorhanden ist. Im gezeigten Beispiel werden sowohl die ersten als auch die zweiten Kernbacken radial nach innen verlagert, um die Einfallbewegung zu bewirken. In alternativen Ausführungsformen bewegen sich dafür nur die ersten oder nur die zweiten Kernbacken radial nach innen.

Sowohl die ersten Kernbacken 5a, 5b als auch die zweiten Kernbacken 6a, 6b weisen jeweilige Kantenwinkel α, β zwischen ihren als gegenseitige Anschlagflächen fungierenden Längsseiten 9 einerseits und ihren Außen- bzw. Umfangsseiten andererseits auf, die größer als 60° sind, vorzugsweise deutlich größer, im gezeigten Fall beispielsweise jeweils ca. 90°. Dies vermeidet allzu spitzwinklige Seitenkanten an den Kernbacken 5a, 5b, 6a, 6b, was einer hohen Druckbelastbarkeit des Faltkerns 1 förderlich ist, wie sie bei Verwendung im Metalldruckguss gefordert sein kann.

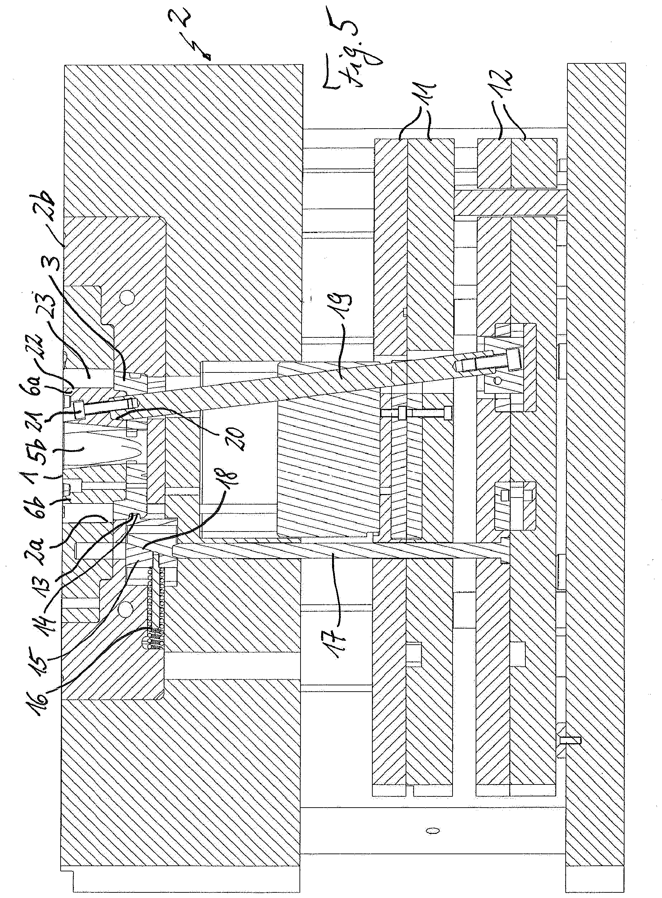

Die Schnittansichten der Figuren 5 bis 8 veranschaulichen den Aufbau der Gießformhälfte 2 im Bereich des Faltkerns 1 und die Position des Faltkerns 1 in verschiedenen Betriebspositionen. Wie aus den Figuren 5 bis 8 ersichtlich, beinhaltet die Gießformhälfte 2 einen üblichen plattenförmigen Aufbau, dessen Vorderseite 2b einem Formhohlraum bzw. einer gegenüberliegenden, nicht gezeigten Formhälfte zugewandt ist, während an der Rückseite eine Auswerfervorrichtung vorgesehen ist, die zwei gekoppelte Auswerferplattenpakete 11, 12 mit je zwei aneinanderliegenden Platten umfasst.

An der Vorderseite 2b ist in die zylinderförmige Faltkernaufnahme 2a der Faltkern 1 mit seinem ringförmigen Basiskörper 3 voraus von vorne her, d.h. in Fig. 5 nach unten, eingesetzt. Der eingesetzte Faltkern 1 ist mittels einer Rastverbindung gesichert in der Aufnahme 2a gehalten. Diese Rastverbindung beinhaltet eine Rastnut 13 als ein erstes Rastmittel am Umfang des Faltkern-Basiskörpers 3 und einen in der Gießformhälfte 2 radial beweglich angeordneten Rastkörper 15 mit einer Rastnase 14 als einem zweiten Rastmittel. Der Rastkörper 15 wird von einer Schraubendruckfeder 16 radial nach innen vorgespannt und greift in der in Fig. 5 gezeigten, verrastenden Stellung mit seiner Rastnase 14 in die Rastnut 13 des Faltkerns 1 ein. Eine als Ausrastelement fungierende Schubstange 17 ist an das hintere Auswerferplattenpaket 12 gekoppelt und in der Gießformhälfte 2 bis zum Rastkörper 15 durchgeführt. Dort wirkt sie mit ihrem Kopfende mit einer schrägen Anlauffläche 18 des Rastkörpers 15 zusammen. Alternativ kann der Rastkörper auch durch andere herkömmliche Mittel geeignet vorgespannt werden, z.B. durch hydraulische Druckmittel.

Zwei weitere Schubstangen, von denen in den Längsschnittansichten der Figuren 5 bis 8 nur die eine Schubstange 19 zu erkennen ist, koppeln je eine der beiden zweiten Kernbacken 6a, 6b an das hintere Auswerferplattenpaket 12 an, wozu jede zweite Kernbacke 6a, 6b an ihrer dem Basiskörper 3 zugewandten Unterseite mit einer den Kopfbereich dieser Vorschubstange 19 aufnehmenden Ausnehmung 20 versehen ist. Optional können die zweiten Kernbacken 6a, 6b wie gezeigt zusätzlich mittels einer Fixierschraube 21 mit der Vorschubstange 19 gekoppelt sein.

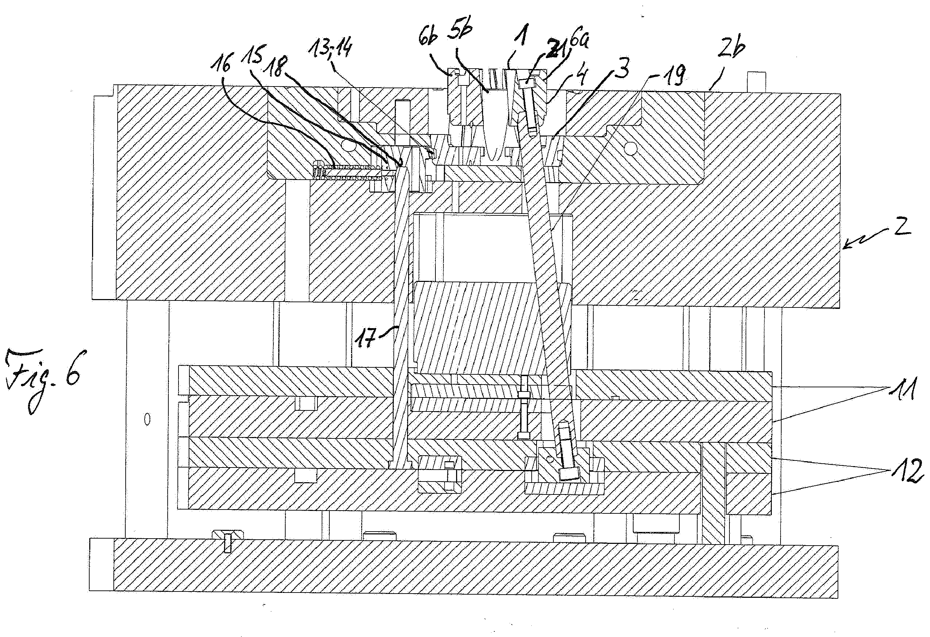

In der Gießposition von Fig. 5 definiert der von vorne in die Vorderseite 2b der Gießformhälfte 2 eingesetzte Faltkern 1 in seinem dann voll entfalteten Zustand mit den nahtlos und mit gleicher axialer Höhe aneinanderliegenden Außenflächen der ersten und zweiten Kernbacken 5a, 5b, 6a, 6b eine Zylindermantelfläche 22, der mit radialem Abstand eine Zylindermantelfläche der Faltkernaufnahme 2a gegenüberliegt. Auf diese Weise begrenzen die gegenüberliegenden Zylindermantelflächen und ein oberseitiger Bereich des ringförmigen Basiskörpers 3 des Faltkerns 1 zusammen mit der nicht gezeigten anderen Gießformhälfte einen z.B. zylinderringförmigen Formhohlraum 23, der während des Gießvorgangs mit dem Gießmaterial, d.h. einem Metallschmelzematerial, gefüllt wird. Um das anschließende Entformen zu ermöglichen bzw. zu erleichtern, speziell im Fall, dass das gegossene Bauteil exakt zylindrisch ist und keine Entformschräge aufweist, oder im Fall, dass es Hinterschneidungen aufweist, führt der Faltkern 1 seine radiale Einfallbewegung während des Entformens aus. Dies ist in den Figuren 6 bis 8 weiter veranschaulicht, wobei der Übersichtlichkeit halber das gegossene Bauteil weggelassen ist.

Wie aus Fig. 6 zu erkennen, bewegt sich zu Beginn des Entformungsvorgangs zunächst das hintere Auswerferplattenpaket 12 bis zum vorderen Auswerferplattenpaket 11. Dadurch drückt die als Ausrastelement fungierende Schubstange 17 durch Anlaufen gegen die Schrägfläche 18 den Rastkörper 15 sukzessive radial nach außen, wobei die Rastverbindung 13, 14 erst noch bestehen bleibt und den Faltkern-Basiskörper 3 und damit auch die ersten Kernbacken 5a, 5b festhält. Demgegenüber werden die zweiten Kernbacken 6a, 6b entlang ihrer Führungen an den ersten Kernbacken 5a, 5b mit axialer Hauptkomponente durch die Vorschubstangen 19 nach vorn bewegt, wodurch die ersten und die zweiten Kernbacken 5a, 5b, 6a, 6b um das vorgegebene Maß radial nach innen wandern und der Faltkern 1 seinen eingefalteten Zustand einnimmt, wie oben erläutert. Dadurch verkleinert sich der Außendurchmesser des Faltkerns 1 und ermöglicht eine problemlose Entformung des entsprechenden Innendurchmessers des gegossenen Bauteils, auch wenn dieses dort keine Entformschräge aufweist oder mit kleinen Hinterschnitten versehen ist.

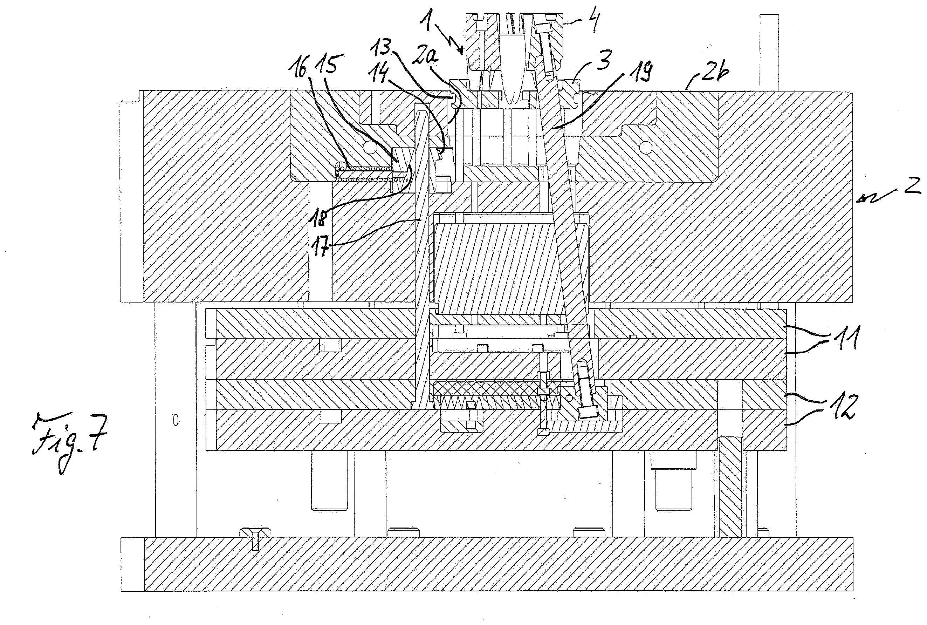

Im weiteren Verlauf des Entformungsvorgangs bewegt sich das hintere Auswerferplattenpaket 12 zusammen mit dem vorderen Auswerferplattenpaket 11 nach vorn, wodurch zunächst die Rastverbindung des Faltkerns 1 in der Gießformhälfte 2 entriegelt wird, indem der radial nach außen gedrängte Rastkörper 15 mit seiner Rastnase 14 aus der Rastnut 13 des Basiskörpers 3 herausgelangt. Anschließend drücken die Vorschubstangen 19 den gesamten, ausgerasteten Faltkern 1 weiter vor bis in eine in Fig. 7 gezeigte Entformstellung, in welcher der von den Kernbacken 5a, 5b, 6a, 6b gebildete Kernzylinderkörper 4 in seinem eingefalteten Zustand vollständig aus der Faltkernaufnahme 2a der Gießformhälfte 2 herausbewegt ist. Nun kann das gegossene Bauteil abgenommen werden. Das vordere Auswerferplattenpaket 11 erfüllt dabei die herkömmliche Auswerferfunktion.

Für einen nächsten Gießvorgang werden die Auswerferplattenpakete 11, 12 wieder zurückbewegt. Wenn der Faltkern 1 zwischen den Gießzyklen nicht abgenommen werden braucht, sondern montiert in einem Dauereinsatz verbleiben soll, ist er mit den erwähnten optionalen Fixierschrauben 21 an die Vorschubstangen 19 gekoppelt und wird dadurch von der Rückbewegung des hinteren Auswerferplattenpakets 12 wieder in die Faltkernaufnahme 2a der Gießformhälfte 2 hineinbewegt, bis er dort wieder in seiner Stellung von Fig. 5 verrastet ist. Gleichzeitig bewegen sich die beiden zweiten Kernbacken 6a, 6b wieder relativ zu den ersten Kernbacken 5a, 5b und zum Basiskörper 3 zurück, so dass der Faltkern 1 von seinem eingefalteten in seinen aufgefalteten Zustand gebracht wird.

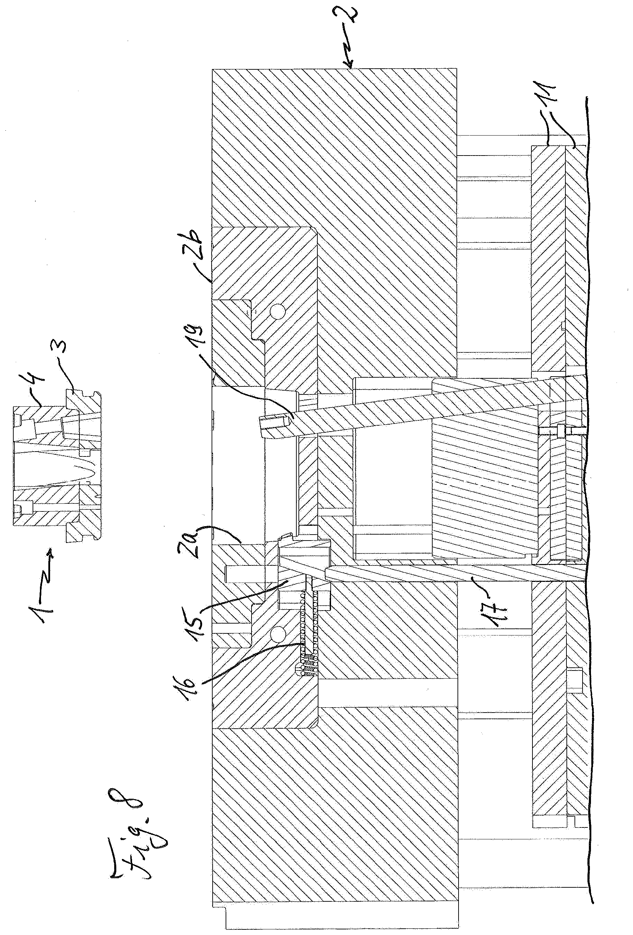

Fig. 8 veranschaulicht alternativ den Anwendungsfall, dass der Faltkern 1 zwischen zwei Gießzyklen vollständig von der Gießformhälfte 2 abgenommen werden soll. In diesem Fall werden die Fixierschrauben 21 vorzugsweise weggelassen, so dass der Faltkern 1 nach Entfernen des gegossenen Bauteils einfach nach vorne von der Vorderseite 2b der Gießformhälfte 2 abgenommen werden kann. Dies kann beispielsweise dazu dienen, den Zylinderaußenmantel des Kernzylinderkörpers 4 des Faltkerns 1 mit einem Beschichtungsmaterial zu versehen, das im nächsten Gießvorgang in den Oberflächenbereich am Innendurchmesser des gegossenen Bauteils übertragen werden soll. Dieses Beschichtungsmaterial braucht folglich nicht auf den Faltkern 1 in seinem an der Gießformhälfte 2 montierten Zustand aufgebracht werden. Vielmehr wird dazu vorteilhaft der Faltkern 1 vollständig von vorne von der Gießformhälfte 2 abgenommen und dann an der Ort des Beschichtungsmaterials verbracht, ohne dass dazu die Gießformhälfte 2 abgenommen und zerlegt werden muss. Nach Anbringen des Beschichtungsmaterials wird der Faltkern 1 wieder von vorne in die Vorderseite 2b der Gießformhälfte 2 eingesetzt.

Der Faltkern 1 bildet in diesem Fall einen Wechselsatz, der nach jedem Gießzyklus oder in gewünschten anderen Zeitintervallen in einfacher Weise getauscht werden kann. Der Wechselvorgang kann z.B. automatisiert durch einen Roboter erfolgen.

Es versteht sich, dass die Erfindung neben dem gezeigten und den oben bereits erwähnten alternativen Ausführungsbeispielen zahlreiche weitere Ausführungsbeispiele umfasst. So kann in entsprechenden alternativen Ausführungsformen vorgesehen sein, dass der Faltkern einen andersartig gebauten Basiskörper aufweist. In entsprechenden Ausführungsformen können die gezeigten Rastmittel zum verrasteten Halten des Faltkerns an der Gießformhälfte durch andere herkömmliche Rastmittel ersetzt sein oder ganz entfallen. Ebenso können anstelle der gezeigten Kernbacken-Vorschubstangen andere herkömmliche Mittel vorgesehen sein, um die Relativbewegung der ersten und zweiten Kernbacken gegeneinander zu bewirken. Weiter versteht sich, dass mit der erfindungsgemäßen Gießformhälfte nicht nur wie gezeigt zylinderringförmige Bauteile, sondern auch Gussteile anderer Form mit Hinterschnitten oder zur Auswurfrichtung parallelen Flächen ohne Entformschräge hergestellt werden können. Im Gegensatz zu üblichen herkömmlichen Faltkernen benötigt vorliegend der Faltkern keine statischen Bereiche, die sich am Gussteil als unveränderbare Geometrie abzeichnen.

Wenngleich das gezeigte Ausführungsbeispiel für die Verwendung zum Metalldruckgießen ausgelegt ist, versteht es sich, dass erfindungsgemäße Gießformhälften in analoger Weise beim Kunststoffspritzgießen Verwendung finden können. - - - - - - - - - - - - - -

## Patentansprüche

1. Gießformhälfte, insbesondere für eine Druckgussform, mit
- einer Faltkernaufnahme (2a) und
- einem in die Faltkernaufnahme eingesetzten Faltkern (1), mit einem Basiskörper (3) und einem sich von diesem im Wesentlichen axial ersteckenden Kernzylinderkörper (4), **dadurch gekennzeichnet, dass**
- der Faltkern (1) als wiederverwendbar abnehmbarer Faltkern ausgeführt ist, der ohne Demontage und ohne Zerlegung der Gießformhälfte formhohlraumseitig mit seinem Basiskörper voraus an der Gießformhälfte lösbar anbringbar ist.

2. Gießformhälfte nach Anspruch 1, weiter **dadurch gekennzeichnet, dass** der Faltkern (1) ein Rastmittel (13) für eine Rastverbindung mit der Gießformhälfte aufweist.

3. Gießformhälfte nach Anspruch 1 oder 2, weiter **dadurch gekennzeichnet, dass** der Kernzylinderkörper (4) wenigstens zwei erste zylindersegmentförmige Kernbacken (5a, 5b) und wenigstens zwei in Umfangsrichtung alternierend zu den ersten angeordnete zweite zylindersegmentförmige Kernbacken (6a, 6b) aufweist, wobei die ersten und die zweiten Kernbacken (5a, 5b, 6a, 6b) relativbeweglich aneinander gehalten sind und die Relativbewegung zwischen den ersten und den zweiten Kernbacken eine axiale Relativbewegungskomponente zwischen den ersten und den zweiten Kernbacken und eine radiale Einfallbewegung der ersten und/oder der zweiten Kernbacken beinhaltet.

4. Gießformhälfte nach Anspruch 3, weiter **dadurch gekennzeichnet, dass** in Axialrichtung vom Basiskörper weg die ersten Kernbacken eine konisch abnehmende Segmentbreite und die zweiten Kernbacken eine korrespondierend konisch zunehmende Segmentbreite (S) aufweisen oder die ersten Kernbacken eine konisch zunehmende Segmentbreite und die zweiten Kernbacken eine korrespondierend konisch abnehmende Segmentbreite aufweisen.

5. Gießformhälfte nach Anspruch 3 oder 4, weiter **dadurch gekennzeichnet, dass** die zweiten Kernbacken Aufnahmemittel (20) für eine Kernbacken-Vorschubstange (19) der Gießformhälfte aufweisen.

6. Gießformhälfte nach einem der Ansprüche 3 bis 5, weiter **dadurch gekennzeichnet, dass** die ersten und zweiten Kernbacken durch formschlüssig zwischen ihnen wirkende Führungsmittel aneinander geführt sind.

7. Gießformhälfte nach einem der Ansprüche 3 bis 6, weiter **dadurch gekennzeichnet, dass** die ersten und die zweiten Kernbacken an ihren Längsseiten Kantenwinkel (α, β) zu den Außenseiten aufweisen, die sämtlich größer als 60° sind.

8. Gießformhälfte nach einem der Ansprüche 1 bis 7, weiter **gekennzeichnet durch** eine Kernbacken-Vorschiebstange (19) und eine Auswerfervorrichtung (11, 12), mit der die Kernbacken-Vorschubstange gekoppelt ist.

9. Gießformhälfte nach einem der Ansprüche 1 bis 8, weiter **gekennzeichnet durch** eine Auswerfervorrichtung (11, 12) und ein mit dem Faltkern-Rastmittel zusammenwirkendes Rastmittel (14) sowie ein mit der Auswerfervorrichtung gekoppeltes Ausrastelement (17) zum selbsttätigen Lösen einer von den zusammenwirkenden Rastmitteln gebildeten Rastverbindung.

## Claims

1. A casting mold half, preferably for a die casting mold, comprising
- a hollow core receptacle (2a) and
- a hollow core (1) inserted into the hollow core receptacle, having a base body (3) and a core cylinder body (4) extending essentially axially from the latter,
**characterized in that**
- the hollow core (1) is embodied as a reusably removable hollow core which is removably attachable to the casting mold half on the mold cavity side, with the base body ahead, without dismantling and without disassembly of the casting mold half.

2. The casting mold half according to claim 1, further **characterized in that** the hollow core (1) comprises a latching means (13) for a latch connection to the casting mold half.

3. The casting mold half according to claim 1 or 2, further **characterized in that** the core cylinder body (4) comprises at least two first core jaws (5a, 5b) in the form of cylinder segments and at least two second core jaws (6a, 6b) in the form of cylinder segments, which are arranged alternately to the first core jaws in the circumferential direction, wherein the first and the second core jaws (5a, 5b, 6a, 6b) are held so that they are relatively movable against one another, and the relative movement between the first and the second core jaws includes an axial relative movement component between the first and the second core jaws and a radial collapsing movement of the first and/or the second core jaws.

4. The casting mold half according to claim 3, further **characterized in that**, in the axial direction away from the base body, the first core jaws comprise a conically decreasing segment width and the second core jaws comprise a corresponding conically increasing segment width (S), or the first core jaws comprise a conically increasing segment width and the second core jaws have a corresponding conically decreasing segment width.

5. The casting mold half according to claim 3 or 4, further **characterized in that** the second core jaws comprise receptacle means (20) for a core jaw push rod (19) of the mold half.

6. The casting mold half according to any one of claims 3 to 5, further **characterized in that** the first and second core jaws are guided against one another by formfitting guide means acting between them.

7. The casting mold half according to any one of claims 3 to 6, further **characterized in that** the first and the second core jaws comprise edge angles (α, β) on their longitudinal sides in relation to the outer sides, which are all greater than 60°.

8. The casting mold half according to any one of claims 1 to 7, further **characterized by** a core jaw push rod (19) and an ejector device (11, 12) to which the core jaw push rod is coupled.

9. The casting mold half according any one of claims 1 to 8, further **characterized by** an ejector device (11, 12) and a latching means (14) interacting with the hollow core latching means, and also a release element (17), which is coupled to the ejector device, for the self-acting disengagement of a latch connection formed by the interacting latching means.

## Revendications

1. Demi-moule, en particulier destiné à un moule de coulée sous pression, comprenant
- une empreinte de noyau éclipsable (2a), et
- un noyau éclipsable (1) inséré dans l'empreinte de noyau éclipsable, doté d'un corps de base (3) et d'un corps cylindrique central (4) s'étendant de manière substantiellement axiale,
**caractérisé en ce que**
- le noyau éclipsable (1) est réalisé sous la forme d'un noyau éclipsable amovible réutilisable qui peut être fixé au demi-moule de manière détachable, son corps de base se trouvant à l'avant, du côté de la cavité de moule, sans démontage ni désassemblage du demi-moule.

2. Demi-moule selon la revendication 1, en outre **caractérisé en ce que** le noyau éclipsable (1) présente un moyen d'encliquetage (13) pour un assemblage par encliquetage avec le demi-moule.

3. Demi-moule selon la revendication 1 ou 2, en outre **caractérisé en ce que** le corps cylindrique central (4) présente au moins deux premières joues de noyau (5a, 5b) en forme de segment cylindrique et au moins deux deuxièmes joues de noyau (6a, 6b) en forme de segment cylindrique, disposées en alternance avec les premières dans la direction circonférentielle, les premières et les deuxièmes joues de noyau (5a, 5b, 6a, 6b) étant maintenues les unes contre les autres de manière avec possibilité de mouvement relatif, et le mouvement relatif entre les premières et les deuxièmes joues de noyau comprenant une composante de mouvement relatif axiale entre les premières et les deuxièmes joues de noyau et un mouvement d'incidence radial des premières et/ou des deuxièmes joues de noyau.

4. Demi-moule selon la revendication 3, en outre **caractérisé en ce que** dans la direction axiale, en s'éloignant du corps de base, les premières joues de noyau présentent une largeur de segment diminuant de manière conique et les deuxièmes joues de noyau présentent de façon correspondante une largeur de segment (S) augmentant de manière conique, ou bien les premières joues de noyau présentent une largeur de segment augmentant de manière conique et les deuxièmes joues de noyau présentent de façon correspondante une largeur de segment diminuant de manière conique.

5. Demi-moule selon la revendication 3 ou 4, en outre **caractérisé en ce que** les deuxièmes joues de noyau présentent des moyens de logement (20) pour un poussoir de joue de noyau (19) du demi-moule.

6. Demi-moule selon l'une quelconque des revendications 3 à 5, en outre **caractérisé en ce que** les premières et les deuxièmes joues de noyau sont guidées les unes contre les autres par complémentarité de forme entre des moyens de guidage agissant entre celles-ci.

7. Demi-moule selon l'une quelconque des revendications 3 à 6, en outre **caractérisé en ce que** les premières et les deuxièmes joues de noyau présentent sur leurs faces longitudinales des angles d'arête (α, β) par rapport aux faces extérieures qui sont tous supérieurs à 60°.

8. Demi-moule selon l'une quelconque des revendications 1 à 7, en outre **caractérisé par** un poussoir de joue de noyau (19) et un dispositif d'éjection (11, 12) auquel est couplé le poussoir de joue de noyau.

9. Demi-moule selon l'une quelconque des revendications 1 à 8, en outre **caractérisé par** un dispositif d'éjection (11, 12) et un moyen d'encliquetage (14) coopérant avec le moyen d'encliquetage de noyau éclipsable, ainsi qu'un élément de désencliquetage (17) couplé au dispositif d'éjection pour un détachement automatique d'un assemblage par encliquetage formé par les moyens d'encliquetage coopérant.
